# EUROPEAN PATENT APPLICATION

(11) **EP 3 739 745 A1**
(43) Date of publication of application: **18.11.2020**
(21) Application number: 18899252.3
(22) Date of filing: 17.12.2018
(51) Int. Cl.: H02P 6/22

(54) **SINGLE-PHASE DIRECT-CURRENT BRUSHLESS MOTOR AND CONTROL APPARATUS AND CONTROL METHOD THEREFOR**

(30) Priority: 09.01.2018 CN 201810017756
(71) Applicant: Bosch Power Tools (China) Co., Ltd., Zhejiang 310052 (CN)
(72) Inventor: WU, Jian, Hangzhou, Zhejiang 310052 (CN)
(74) Representative: Bee, Joachim
(86) International application number: PCT/CN2018/121420
(87) International publication number: WO 2019/137156

(57) **Abstract**

A single-phase DC brushless motor, and a control apparatus and control method therefor. A body (100) of the motor comprises a rotor (110) and a stator (120). The control apparatus (200) comprises: a first position detection device (210), configured to detect a position of the rotor (110) and output a rotor position signal; a predetermined angle detection device (220), configured to detect whether the rotor (110) has rotated through a predetermined angle in a forward direction relative to the first position detection device (210), and output a detection signal; a commutation circuit device (230), configured to switch an energization phase sequence for the coil windings; and a control device (240). The control device (240) is configured to control the commutation circuit device (230) according to the rotor position signal so that the rotor (110) rotates in the forward direction, upon receiving a reverse rotation start-up instruction; and configured to control the commutation circuit device (230) so that the rotor (110) rotates in a reverse direction, when the detection signal indicates that the rotor (110) has rotated through the predetermined angle in the forward direction.

## Description

### Technical field

The present application relates to the field of motors and motor control, in particular to a single-phase direct-current (DC) brushless motor, and a control apparatus and control method for a single-phase DC brushless motor.

### Background art

In brushless direct current (BLDC) motors, an electronic commutator replaces mechanical brushes and a mechanical commutator; thus, this type of electric motor not only retains the advantages of DC electric motors but also has advantages of AC electric motors such as structural simplicity, reliable operation and convenient maintenance. For this reason, brushless direct current (BLDC) motors are used in various electric tools.

Among the various types of brushless direct current (BLDC) motors, single-phase DC brushless motors in particular have advantages such as long life, fast acceleration, structural simplicity and low cost. However, existing single-phase DC brushless motors can only rotate in one direction, due to their own electrical characteristics. Thus, an electric tool using a single-phase DC brushless motor can likewise only act in one direction. When a particular operation requires an electric tool to rotate in one direction sometimes and in another, opposite direction at other times, an electric tool using a single-phase DC brushless motor is unable to satisfy such a requirement.

Thus, there is an urgent need for an improved single-phase brushless DC motor, in order to overcome the shortcomings in the prior art.

### Content of the invention

An object of the present invention is to provide an improved single-phase brushless DC motor, which has an improved control apparatus, such that the single-phase brushless DC motor is able to start up and run in two ways, specifically forward rotation and reverse rotation.

To this end, according to one aspect of the present invention, a control apparatus for a single-phase DC brushless motor is provided, wherein a body of the motor comprises a rotor and a stator, the stator being formed of multiple coil windings connected together, and the rotor being formed of one or more pairs of magnetic poles arranged such that N and S poles alternate with each other, the control apparatus comprising:
a first position detection device, installed on the body of the motor, and configured to detect a position of the rotor and output a rotor position signal;
a predetermined angle detection device, configured to detect whether the rotor has rotated through a predetermined angle in a forward direction relative to the first position detection device, and output a detection signal;
a commutation circuit device, connected to the motor body, and configured to switch an energization phase sequence for the coil windings, in order to control a rotation direction and running of the rotor; and
a control device, connected to the first position detection device, the predetermined angle detection device and the commutation circuit device, wherein the control device is configured to control the energization phase sequence of the commutation circuit device for the coil windings according to the rotor position signal received from the first position detection device so that the rotor rotates in the forward direction, upon receiving a reverse rotation start-up instruction; and configured to control the energization phase sequence of the commutation circuit device for the coil windings so that the rotor rotates in a reverse direction, when the detection signal received from the predetermined angle detection device indicates that the rotor has rotated through the predetermined angle in the forward direction relative to the first position detection device.

In one embodiment, the control device is further configured to: control the commutation circuit device to switch the energization phase sequence for the coil windings each time a state of the rotor position signal changes, wherein a change in the state of the rotor position signal indicates a change of the magnetic pole of the rotor opposite the first position detection device.

In one embodiment, the predetermined angle detection device is a second position detection device configured to detect a position of the rotor and output a rotor position signal, the second detection device (220') being located in the direction of forward rotation of the rotor (110) relative to the first position detection device (210); an angle of deviation between the second detection device (220') and the first position detection device (210) corresponds to the predetermined angle, and when the rotor (110) has rotated through the predetermined angle in the forward direction, a state of the rotor position signal outputted by the second position detection device changes.

In one embodiment, the second position detection device is disposed opposite the same coil winding of the stator as the first position detection device, and the sum of the angle of deviation between the second position detection device and the first position detection device and an angle of deviation of the first position detection device relative to a starting point of the coil winding opposite the first position detection device is less than a mechanical angle of one coil winding.

In one embodiment, the first position detection device and the second position sensor each employ one of a Hall sensor, a shaft angle sensor or a photoelectric sensor.

In one embodiment, the predetermined angle detection device is a timer, and the control device is configured to enable the timer at the same time as the rotor rotates in the forward direction; when a count value of the timer reaches a predetermined count value, this indicates that the rotor has rotated through the predetermined angle in the forward direction.

In one embodiment, the control apparatus further comprises a drive device, the drive device being connected to the control device and the commutation circuit device, and configured to output a corresponding drive signal according to an output of the control device.

In one embodiment, the commutation circuit device employs an H bridge circuit, composed of 2 half-bridges formed by connecting 4 power logic switches pairwise, with output ends of the half-bridges being separately connected to the coil windings; the drive signal turns each power logic switch on or off, in order to control the energization phase sequence for the coil windings.

In one embodiment, the control apparatus further comprises a signal processing device, connected to the first position detection device, the predetermined angle detection device and the control device, and configured to perform signal processing on the first position signal and the detection signal, and output the processed signals to the control device.

In one embodiment, the control device employs a single-chip microcomputer or DSP or ARM.

According to another aspect of the present invention, a control method for a single-phase DC brushless motor is provided, wherein a body of the motor comprises a rotor and a stator, the stator being formed of multiple coil windings connected together, and the rotor being formed of one or more pairs of magnetic poles arranged such that N and S poles alternate with each other, the control method comprising:
acquiring a reverse rotation start-up instruction;
controlling an energization phase sequence for the coil windings according to a rotor position signal detected by a first position detection device, so that the rotor rotates in a forward direction;
determining whether the rotor has rotated through a predetermined angle in the forward direction relative to the first position detection device; and
if it is determined that the rotor has rotated through the predetermined angle in the forward direction, the energization phase sequence for the coil windings is switched, so that the rotor rotates in a reverse direction.

In one embodiment, the control method further comprises: the energization phase sequence for the coil windings is switched each time a change in a state of the rotor position signal is detected, wherein a change in the state of the rotor position signal indicates a change of the magnetic pole of the rotor opposite the first position detection device.

In one embodiment, the step of determining whether the rotor has rotated through the predetermined angle relative to the first position detection device comprises: determining whether a state of a rotor position signal detected by a second position detection device has changed, wherein a change in the state of the rotor position signal detected by the second position detection device indicates that the rotor has rotated through the predetermined angle in the forward direction.

In one embodiment, the step of determining whether the rotor has rotated through the predetermined angle relative to the first position detection device comprises: enabling a timer at the same time as the rotor rotates in the forward direction; and determining whether a count value of the timer has reached a predetermined count value, wherein when the count value of the timer reaches the predetermined count value, this indicates that the rotor has rotated through the predetermined angle in the forward direction.

According to another aspect of the present invention, a single-phase DC brushless motor is provided, comprising:
a body, having a rotor and a stator, the stator being formed of multiple coil windings connected together, and the rotor being formed of one or more pairs of magnetic poles arranged such that N and S poles alternate with each other;
a control apparatus connected to the body, the control apparatus comprising:
   a first position detection device, installed on the body of the motor and connected thereto, and configured to detect a position of the rotor and output a rotor position signal;
   a predetermined angle detection device, configured to detect whether the rotor has rotated through a predetermined angle in a forward direction relative to the first position detection device, and output a detection signal;
   a commutation circuit device, connected to the motor body, and configured to switch an energization phase sequence for the coil windings, in order to control a rotation direction and running of the rotor; and
   a control device, connected to the first position detection device, the predetermined angle detection device and the commutation circuit device, wherein the control device is configured to control the energization phase sequence of the commutation circuit device for the coil windings according to the rotor position signal received from the first position detection device so that the rotor rotates in the forward direction, upon receiving a reverse rotation start-up instruction; and configured to control the energization phase sequence of the commutation circuit device for the coil windings so that the rotor rotates in a reverse direction, when the detection signal received from the predetermined angle detection device indicates that the rotor has rotated through the predetermined angle in the forward direction relative to the first position detection device.

The single-phase DC brushless motor according to the present invention has broader applicability, and in particular can be used in an electric tool which rotates in two directions.

### Description of the accompanying drawings

A more thorough understanding of and familiarity with the above-mentioned and other aspects of the present application will be gained below, based on particular embodiments with reference to the accompanying drawings, in which:
Fig. 1a shows a block diagram of a control apparatus for a single-phase DC brushless motor according to an embodiment of the present invention.
Fig. 1b is a schematic diagram of part of the structure of a control apparatus and a body of the single-phase DC brushless motor shown by way of example in fig. 1a.
Fig. 2a shows a block diagram of a control apparatus for a single-phase DC brushless motor according to another embodiment of the present invention.
Fig. 2b is a schematic diagram of part of the structure of a control apparatus and a body of the single-phase DC brushless motor shown by way of example in fig. 2a.
Fig. 3 shows a block diagram of a control apparatus for a single-phase DC brushless motor according to another embodiment of the present invention.
Fig. 4 shows a flow chart of a control method for a single-phase DC brushless motor according to the present invention.

### Particular embodiments

Embodiments of the present invention are explained in detail below, and examples of the present invention are illustrated in the drawings; similar labels in the drawings always indicate similar elements.

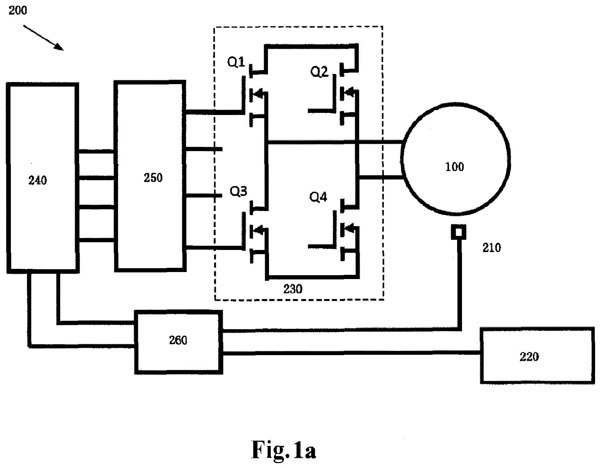

The present invention relates in general to a single-phase DC brushless motor, comprising a motor body and a control apparatus connected to the motor body. The motor body comprises a stator and a rotor. In a single-phase DC brushless motor, in terms of structure, stator slots are processed asymmetrically in order to produce asymmetric air gap magnetoresistance, so as to eliminate the electromagnetic torque dead point. That is to say, in the case of a single-phase DC brushless motor, in a non-energized state, a magnetic circuit center line of the rotor deviates from a stator center line (see AA' and BB' in fig. 1a) by a certain angle. The direction of deviation from the stator center line is defined as the forward rotation direction of the motor rotor; the other direction is the reverse rotation direction of the motor rotor. For example, referring to the asymmetric structure shown by way of example in fig. 1a, the anticlockwise direction is the forward direction. It should be understood that a single-phase DC brushless motor may also be structurally designed in an opposite manner to the asymmetric structure in fig. 1a, in which case the clockwise direction is accordingly the forward direction. Let the energization phase sequence of forward rotation of the motor rotor be defined as the forward phase sequence (or first phase sequence), and let the energization phase sequence of reverse rotation of the motor rotor be defined as the reverse phase sequence (or second phase sequence). Of course, forward rotation and reverse rotation are relative concepts; the correspondence between the rotation direction of the motor rotor and the energization phase sequence could also be defined in another appropriate manner.

Based on its asymmetric structural design, the single-phase DC brushless motor can cross the electromagnetic torque dead point when starting up in forward rotation, to smoothly enter a state of acceleration. The following is principally a description of the technical solution according to the present invention, namely a control apparatus and a control method enabling a single-phase DC brushless motor to start up in reverse rotation.

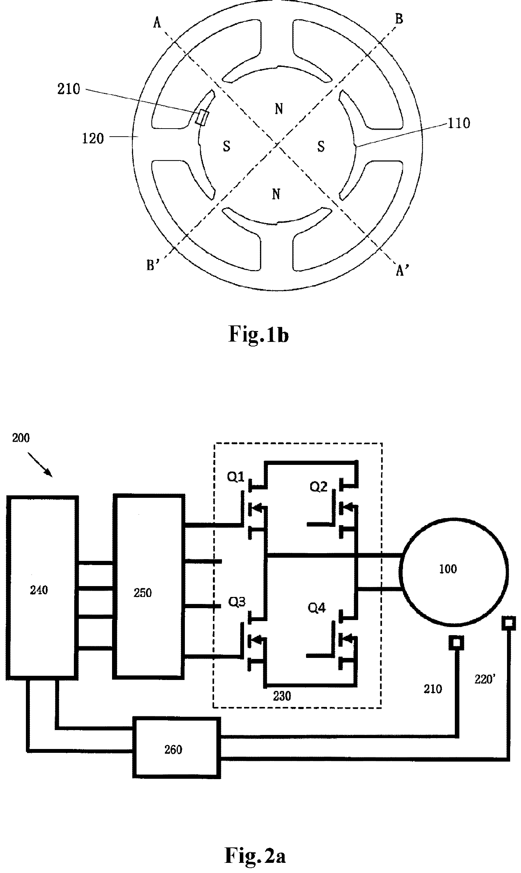

Fig. 1a shows a block diagram of a control apparatus for a single-phase DC brushless motor according to an embodiment of the present invention. Fig. 1b is a schematic diagram of the control apparatus and a body of the single-phase DC brushless motor shown by way of example in fig. 1a, wherein the motor body 100 comprises a rotor 110 and a stator 120. The stator 120 has multiple coil windings which are connected together to form a single-phase structure. The rotor 110 has one or more pairs of magnetic poles which are arranged such that N and S magnetic poles alternate with each other. Fig. 1b shows an example in which the stator is formed of 4 coil windings connected together, but the present invention is not limited to this; the quantity and arrangement of the coil windings may be realized in another suitable manner. Fig. 1b shows an example in which the rotor is formed of 4 magnetic poles (2 pairs), but the present invention is not limited to this; the number of pairs of magnetic poles may be another number. As shown in fig. 1a, the control apparatus 200 of the single-phase DC brushless motor according to the present invention comprises: a first position detection device 210, a predetermined angle detection device 220, a commutation circuit device 230 and a control device 240.

The first position detection device 210 is connected to the motor body 100, and configured to detect a position of the rotor 110 and output a rotor position signal. Fig. 1b shows the first position detection device 210 located on a stator slot center line AA', but there is no restriction to this. The first position detection device 210 may be disposed in any other suitable position. The predetermined angle detection device 220 is connected to the motor body 100, and configured to detect whether the rotor 110 has rotated through a predetermined angle α in the forward direction relative to the first position detection device 110, and output a detection signal. The commutation circuit device 230 is connected to the motor body 100, and configured to switch the energization phase sequence for the coil windings, in order to control the rotation direction of the rotor 110. The control device 240 is connected to the first position detection device 210, the predetermined angle detection device 220 and the commutation circuit device 230. The control device 240 receives the rotor position signal outputted by the first position detection device 110 and the detection signal outputted by the predetermined angle detection device 220, and controls the energization phase sequence of the commutation circuit device 230 for the coil windings according to the rotor position signal and the detection signal.

The first position detection device 210 is for example a Hall sensor, outputting a HIGH signal or a LOW signal according to whether an N magnetic pole or an S magnetic pole of the rotor is opposite the Hall sensor. For example, the N magnetic pole corresponds to the HIGH signal, and the S magnetic pole corresponds to the LOW signal; alternatively, the converse is also possible. When the control device 240 detects a state change of the rotor position signal, i.e. a HIGH/LOW change (e.g. HIGH changing to LOW or LOW changing to HIGH), in other words a change of the rotor magnetic pole that is opposite the first position detection device 210, the control device 240 controls the commutation circuit device 230 to switch the energization phase sequence for the coil windings. The predetermined angle detection device 220 is for example an angle sensor, detecting a rotation angle of the rotor 110 relative to the first position detection device 110. When the control device 240 detects that the detection signal outputted by the angle sensor indicates that the rotor 110 has rotated through the predetermined angle α in the forward direction relative to the first position detection device 110, the commutation circuit device 230 is controlled to switch the energization phase sequence for the coil windings.

The process by which reverse rotation of the single-phase DC brushless motor is controlled using the control device 200 of the present invention is explained in detail below. Upon receiving a reverse rotation start-up instruction, the control device 240 controls the energization phase sequence of the commutation circuit device 230 for the coil windings according to the rotor position signal received from the first position detection device 210, so that the rotor 110 rotates in the forward direction. The control device 240 monitors the detection signal outputted from the predetermined angle detection device 220. When the control device 240 determines that the detection signal indicates that the rotor 110 has rotated through the predetermined angle α in the forward direction relative to the first position detection device 210, the energization phase sequence of the commutation circuit device 230 for the coil windings is controlled, so that the rotor 110 rotates in the reverse direction. When the control device 240 detects each change in the state of the rotor position signal outputted by the first position detection device 210, the commutation circuit device 230 is controlled to switch the energization phase sequence for the coil windings. A change in the state of the rotor position signal outputted by the first position detection device 210 indicates a change of the rotor magnetic pole opposite the first position detection device 210. In other words, each time the magnetic pole opposite the first position detection device 210 changes, the energization phase sequence for the coil windings is switched, in order to maintain rotation of the motor rotor 110 in the desired direction at all times. In a real example, the control device 240 employs a single-chip microcomputer or DSP or ARM. It should be understood that the control device 240 may also be realized in another suitable fashion; there is no restriction to this.

Continuing to refer to fig. 1a, the control apparatus 200 of the single-phase DC brushless motor according to the present invention further comprises a drive device 250 and a signal processing device 260. The drive device 250 is connected to the control device 240 and the commutation circuit device 230, and configured to output a corresponding drive signal according to a control signal outputted by the control device 240, in order to drive the commutation circuit device 230. The signal processing device 260 is connected between an output end of the first position detection device 210 and an output end of the predetermined angle detection device 220 on the one hand and an input end of the control device 240 on the other. The signal processing device 260 performs signal processing, e.g. filtering and/or reshaping, on the rotor position signal outputted by the first position detection device 210 and the detection signal outputted by the predetermined angle detection device 220, and outputs the processed signals to the control device 240.

In a real example, the commutation circuit device 230 employs an H bridge circuit, composed of 2 half-bridges (Q1-Q2 and Q3-Q4) formed by connecting 4 power logic switches Q1, Q2, Q3 and Q4 pairwise, with output ends of the half-bridges being separately connected to the coil windings. The drive signal outputted by the drive device 250 turns each power logic switch Q1, Q2, Q3 and Q4 on or off, in order to control the energization phase sequence for the coil windings. For example, when the coil windings are energized in a first phase sequence, Q1 and Q3 are turned on, but Q2 and Q4 are turned off. When the coil windings are energized in a second phase sequence, Q1 and Q3 are turned off, but Q2 and Q4 are turned on. Of course, the correspondence between the energization phase sequence and the turning of each power logic switch on or off may also be defined in another manner. In a real example, the power logic switches Q1, Q2, Q3 and Q4 are all power MOSFETs.

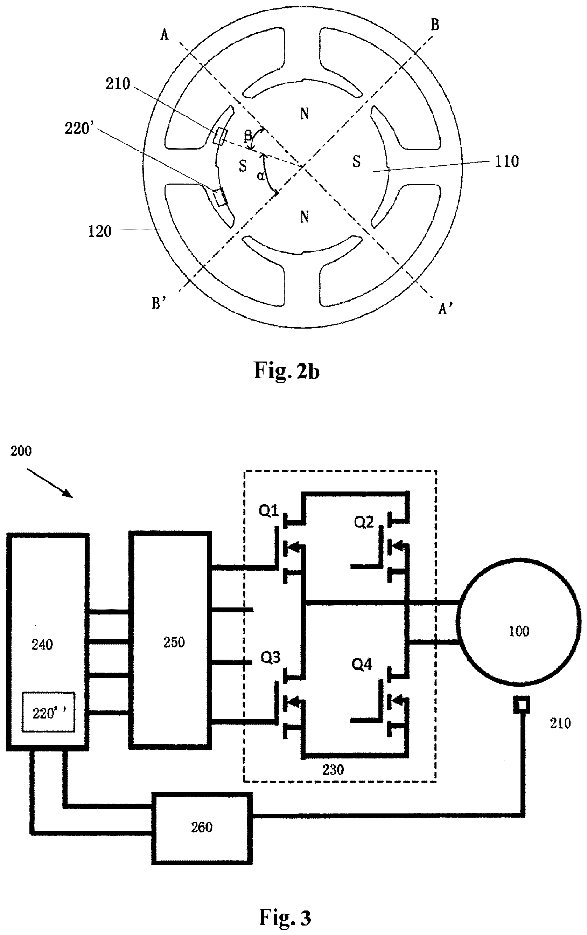

Fig. 2a shows a block diagram of a control apparatus for a single-phase DC brushless motor according to another embodiment of the present invention; fig. 2b is a schematic diagram of the main parts of the control apparatus and a body of the single-phase DC brushless motor shown by way of example in fig. 2a. In this embodiment, the predetermined angle detection device 220 is realized as a second position detection device 220', but other aspects are the same as in the embodiment described above, so are not described again here. The second position detection device 220' is configured to detect a position of the rotor 110 and output a rotor position signal. When the rotor 110 has rotated through the predetermined angle α in the forward direction relative to the first position detection device 210, the state of the rotor position signal detected by the second position detection device 220' changes.

The second position detection device 220' is disposed opposite the same coil winding of the stator 120 as the first position detection device 210. That is to say, the second position detection device 220' and the first position detection device 210 are both located in a mechanical angle range of the same coil of the stator 120. The second detection device 220' is located in the direction of forward rotation of the rotor 110 relative to the first position detection device 210. Referring to fig. 2b, an angle of deviation of the first position detection device 210 relative to a starting point of the coil winding opposite the first position detection device is β, and an angle of deviation between the second position detection device 220' and the first position detection device 210 is α, i.e. the angle of deviation between the second position detection device 220' and the first position detection device 210 corresponds to the predetermined angle α. When the rotor 110 has rotated through the predetermined angle α in the forward direction, the state of the rotor position signal detected by the second position detection device 220' changes. The control device 240 controls the energization phase sequence of the commutation circuit device 230 for the coil windings according to the change in state of the rotor position signal detected by the second position detection device 220', so that the motor rotor rotates in the reverse direction. Here, the sum of the angle of deviation α between the second position detection device 220' and the first position detection device 210 and the angle of deviation β of the first position detection device 210 relative to the starting point of the coil winding opposite the first position detection device is less than a mechanical angle of one coil winding. The mechanical angle of one coil winding equals 360° divided by the number of coil windings in the stator. For example, fig. 2b shows that the stator has 4 coil windings, so the mechanical angle of one coil winding is 90°.

For example, the first position detection device 210 and the second position detection device 220' are both Hall sensors. When the position of the rotor is such that the rotor magnetic pole opposite the Hall sensor is an N magnetic pole, the rotor position signal outputted by the Hall sensor is for example HIGH; when the position of the rotor is such that the rotor magnetic pole opposite the Hall sensor is an S magnetic pole, the rotor position signal outputted by the Hall sensor is for example LOW. Clearly, a change in the state of the rotor position signal (e.g. HIGH changing to LOW or LOW changing to HIGH) indicates a change in the position of the rotor, i.e. a change of the rotor magnetic pole opposite the Hall sensor, e.g. a change from an N magnetic pole to an S magnetic pole or a change from an S magnetic pole to an N magnetic pole. Of course, the correspondence between N/S magnetic poles on the one hand and HIGH/LOW on the other may also be defined in the converse manner.

It can be understood that the first position detection device 210 and the second position detection device 220' may be realized in any other suitable form. For example, the first position detection device 210 and the second position detection device 220' may also be a shaft angle sensor or a photoelectric sensor, etc.

Fig. 3 shows a block diagram of a control apparatus for a single-phase DC brushless motor according to another embodiment of the present invention. In this embodiment, the predetermined angle detection device 220 is realized as a timer 220", but other aspects are the same as in the embodiment described above, so are not described again here. The timer 220" may be realized as software, or as hardware, or as a combination of software and hardware. The timer 220" shown in fig. 3 is shown by way of example as a program module in the control device 240, but the present invention is not limited to this. In this embodiment, at the same time as the coil windings are energized in the first phase sequence, that is to say, at the same time as the motor rotor 110 begins to rotate in the forward direction, the timer 220" is enabled, in order to subject the forward rotation of the motor rotor 110 to counting, and a count value is outputted to the control device 240. A predetermined count value is stored in a memory (not shown) of the control device 240; the predetermined count value corresponds to the predetermined angle α. When the count value outputted by the timer 220" reaches the predetermined count value, this indicates that the rotor 110 has rotated through the predetermined angle α in the forward direction. When the control device 240 determines that the count value outputted by the timer 220" has reached the predetermined count value, the energization phase sequence of the commutation circuit device 230 for the coil windings is controlled, so that the motor rotor rotates in the reverse direction.

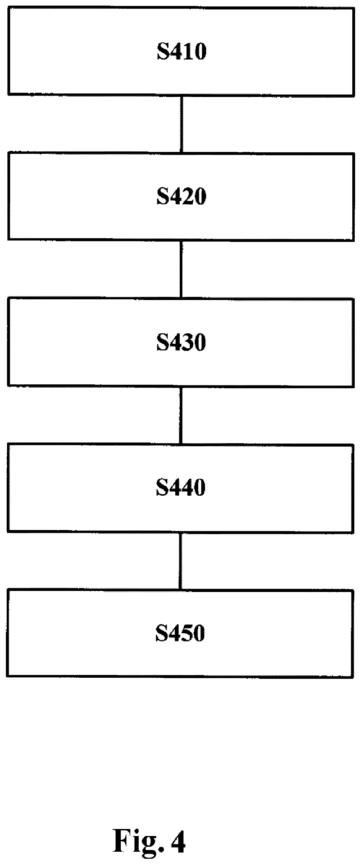

Fig. 4 shows a flow chart of a control method for a single-phase DC brushless motor according to an embodiment of the present invention, wherein the motor body 100 comprises the rotor 110 and the stator 120. The stator 120 has multiple coil windings which are connected together to form a single-phase structure. The rotor 110 has one or more pairs of magnetic poles which are arranged such that N and S magnetic poles alternate with each other. The control method for a single-phase DC brushless motor according to the present invention is described in detail below.

In box S410, a reverse rotation start-up instruction is acquired. Here, the reverse rotation start-up instruction may be indicated by a user, e.g. applied by the user to an electric tool in which the single-phase DC brushless motor is used. After the start-up instruction has been acquired, the control device 240 sets an initial PWM duty cycle of the motor, so that the motor can begin running when started up.

In box S420, the first position detection device 210 detects the position of the rotor 110, and outputs the rotor position signal to the control device 240; the control device 240 controls the energization phase sequence for the coil windings according to the rotor position signal received, so that the rotor 110 rotates in the forward direction.

In box S430, the control device 240 determines whether the rotor 110 has rotated through the predetermined angle α in the forward direction relative to the first position detection device 210. In one embodiment, the control device 240 determines whether the state of the rotor position signal detected by the second position detection device 220' has changed. When the rotor 110 has rotated through the predetermined angle α in the forward direction, the state of the rotor position signal outputted by the second position detection device 220' changes. In another embodiment, the timer 220" is enabled at the same time as the rotor 110 begins to rotate in the forward direction, and the control device 240 determines whether the count value of the timer 220" has reached the predetermined count value. When the count value of the timer 220" reaches the predetermined count value, this indicates that the rotor 110 has rotated through the predetermined angle α in the forward direction. Here, the predetermined count value is a value corresponding to the predetermined angle α.

In box S440, if the control device 240 determines that the rotor 110 has rotated through the predetermined angle α in the forward direction, the energization phase sequence for the coil windings is switched, so that the motor rotor rotates in the reverse direction.

In box S450, each time the control device 240 detects a change in the state of the rotor position signal outputted by the first position detection device 210, the energization phase sequence for the coil windings is switched. A change in the state of the rotor position signal outputted by the first position detection device 210 indicates a change of the magnetic pole of the rotor opposite the first position detection device 210, e.g. a change from an S magnetic pole to an N magnetic pole, or a change from an N magnetic pole to an S magnetic pole.

According to the technical solution of the present invention, the single-phase DC brushless motor can start up in forward rotation or start up in reverse rotation under the control of the control apparatus thereof. Thus, the single-phase DC brushless motor according to the present invention can be used in an electric tool which runs in two directions. The single-phase DC brushless motor and control apparatus thereof according to the present invention vastly increase their scope of application with a simple structure at low cost, and also have advantages such as a long life and reliable operation.

Although the present application has been described here with reference to particular embodiments, the scope of the present application is not limited to the details shown. Various amendments may be made to these details without departing from the basic principles of the present application.

## Claims

1. A control apparatus for a single-phase DC brushless motor, wherein a body (100) of the motor comprises a rotor (110) and a stator (120), the stator (120) being formed of multiple coil windings connected together, and the rotor (110) being formed of one or more pairs of magnetic poles arranged such that N and S poles alternate with each other, the control apparatus (200) comprising:
a first position detection device (210), installed on the body (100) of the motor, and configured to detect a position of the rotor (110) and output a rotor position signal;
a predetermined angle detection device (220), configured to detect whether the rotor (110) has rotated through a predetermined angle in a forward direction relative to the first position detection device (210), and output a detection signal;
a commutation circuit device (230), connected to the motor body (100), and configured to switch an energization phase sequence for the coil windings, in order to control a rotation direction and running of the rotor (110); and
a control device (240), connected to the first position detection device (210), the predetermined angle detection device (220) and the commutation circuit device (230), wherein the control device (240) is configured to control the energization phase sequence of the commutation circuit device (230) for the coil windings according to the rotor position signal received from the first position detection device (210) so that the rotor rotates in the forward direction, upon receiving a reverse rotation start-up instruction; and configured to control the energization phase sequence of the commutation circuit device (230) for the coil windings so that the rotor (110) rotates in a reverse direction, when the detection signal received from the predetermined angle detection device (220) indicates that the rotor has rotated through the predetermined angle in the forward direction relative to the first position detection device (210).

2. The control apparatus as claimed in claim 1, wherein the control device (240) is further configured to: control the commutation circuit device (230) to switch the energization phase sequence for the coil windings each time a state of the rotor position signal changes, wherein a change in the state of the rotor position signal indicates a change of the magnetic pole of the rotor (110) opposite the first position detection device (210).

3. The control apparatus as claimed in claim 2, wherein the predetermined angle detection device (220) is a second position detection device (220') configured to detect a position of the rotor (110) and output a rotor position signal, the second detection device (220') being located in the direction of forward rotation of the rotor (110) relative to the first position detection device (210); an angle of deviation between the second detection device (220') and the first position detection device (210) corresponds to the predetermined angle, and when the rotor (110) has rotated through the predetermined angle in the forward direction, a state of the rotor position signal outputted by the second position detection device (220') changes.

4. The control apparatus as claimed in claim 3, wherein the second position detection device (220') is disposed opposite the same coil winding of the stator (120) as the first position detection device (210), and the sum of the angle of deviation between the second position detection device (220') and the first position detection device (210) and an angle of deviation of the first position detection device (210) relative to a starting point of the coil winding opposite the first position detection device is less than a mechanical angle of one coil winding.

5. The control apparatus as claimed in claim 3 or 4, wherein the first position detection device (210) and the second position sensor (220') each employ one of a Hall sensor, a shaft angle sensor or a photoelectric sensor.

6. The control apparatus as claimed in claim 1 or 2, wherein the predetermined angle detection device (220) is a timer (220"), and the control device (240) is configured to enable the timer (220") at the same time as the rotor rotates in the forward direction; when a count value of the timer (220") reaches a predetermined count value, this indicates that the rotor (110) has rotated through the predetermined angle in the forward direction.

7. The control apparatus as claimed in claim 1 or 2, further comprising a drive device (250), the drive device (250) being connected to the control device (240) and the commutation circuit device (230), and configured to output a corresponding drive signal according to an output of the control device (240).

8. The control apparatus as claimed in claim 7, wherein the commutation circuit device (230) employs an H bridge circuit, composed of 2 half-bridges formed by connecting 4 power logic switches pairwise, with output ends of the half-bridges being separately connected to the coil windings; the drive signal turns each power logic switch on or off, in order to control the energization phase sequence for the coil windings.

9. The control apparatus as claimed in claim 1, further comprising a signal processing device (260), connected to the first position detection device (210), the predetermined angle detection device (220) and the control device (240), and configured to perform signal processing on the first position signal and the detection signal, and output the processed signals to the control device (240).

10. The control apparatus as claimed in claim 1, wherein the control device (240) employs a single-chip microcomputer or DSP or ARM.

11. A control method for a single-phase DC brushless motor, wherein a body (100) of the motor comprises a rotor (110) and a stator (120), the stator (120) being formed of multiple coil windings connected together, and the rotor (110) being formed of one or more pairs of magnetic poles arranged such that N and S poles alternate with each other, the control method comprising:
acquiring a reverse rotation start-up instruction;
controlling an energization phase sequence for the coil windings according to a rotor position signal detected by a first position detection device (210), so that the rotor (110) rotates in a forward direction;
determining whether the rotor (110) has rotated through a predetermined angle in the forward direction relative to the first position detection device (210); and
if it is determined that the rotor (110) has rotated through the predetermined angle in the forward direction, the energization phase sequence for the coil windings is switched, so that the rotor (110) rotates in a reverse direction.

12. The control method as claimed in claim 11, further comprising: the energization phase sequence for the coil windings is switched each time a change in a state of the rotor position signal is detected, wherein a change in the state of the rotor position signal indicates a change of the magnetic pole of the rotor opposite the first position detection device (210).

13. The method as claimed in claim 11 or 12, wherein the step of determining whether the rotor (110) has rotated through the predetermined angle relative to the first position detection device (210) comprises: determining whether a state of a rotor position signal detected by a second position detection device (220') has changed, wherein a change in the state of the rotor position signal detected by the second position detection device (220') indicates that the rotor (110) has rotated through the predetermined angle in the forward direction.

14. The method as claimed in claim 11 or 12, wherein the step of determining whether the rotor (110) has rotated through the predetermined angle relative to the first position detection device (210) comprises: enabling a timer (220") at the same time as the rotor rotates in the forward direction; and determining whether a count value of the timer (220") has reached a predetermined count value, wherein when the count value of the timer (220") reaches the predetermined count value, this indicates that the rotor (110) has rotated through the predetermined angle in the forward direction.

15. A single-phase DC brushless motor, comprising:
a body (100), having a rotor (110) and a stator (120), the stator (120) being formed of multiple coil windings connected together, and the rotor (110) being formed of one or more pairs of magnetic poles arranged such that N and S poles alternate with each other;
a control apparatus (200) connected to the body (100), the control apparatus (200) comprising:
a first position detection device (210), installed on the body (100) of the motor and connected thereto, and configured to detect a position of the rotor (110) and output a rotor position signal;
a predetermined angle detection device (220), configured to detect whether the rotor (110) has rotated through a predetermined angle in a forward direction relative to the first position detection device (210), and output a detection signal;
a commutation circuit device (230), connected to the motor body (100), and configured to switch an energization phase sequence for the coil windings, in order to control a rotation direction and running of the rotor (110); and
a control device (240), connected to the first position detection device (210), the predetermined angle detection device (220) and the commutation circuit device (230), wherein the control device (240) is configured to control the energization phase sequence of the commutation circuit device (230) for the coil windings according to the rotor position signal received from the first position detection device (210) so that the rotor (110) rotates in the forward direction, upon receiving a reverse rotation start-up instruction; and configured to control the energization phase sequence of the commutation circuit device (230) for the coil windings so that the rotor (110) rotates in a reverse direction, when the detection signal received from the predetermined angle detection device (220) indicates that the rotor (110) has rotated through the predetermined angle in the forward direction relative to the first position detection device (210).
